# EUROPÄISCHE PATENTSCHRIFT

(11) **EP 0 722 864 B1**
(45) Veröffentlichungstag und Bekanntmachung des Hinweises auf die Patenterteilung: **21.04.1999**
(21) Anmeldenummer: 96100769.7
(22) Anmeldetag: 19.01.1996
(51) Int. Cl.: B60R 22/46, B60R 22/34

(54) **Transportsicherung an einem Gurtaufroller**
Transport security device for a belt retractor
Dispositif de sûreté lors du transport pour un rétracteur de ceinture

(30) Priorität: 19.01.1995 DE 29500817 U
(43) Veröffentlichungstag der Anmeldung: 24.07.1996
(73) Patentinhaber: TRW Occupant Restraint Systems GmbH & Co. KG, 73551 Alfdorf (DE)
(72) Erfinder: Röhrle, Martin, D-73557 Mutlangen (DE)
(74) Vertreter: Degwert, Hartmut, Dipl.-Phys.

(56) Entgegenhaltungen:
- EP-A- 0 456 853
- EP-A- 0 529 501
- DE-A- 2 927 159
- DE-A- 3 600 003
- DE-U-29 507 113
- US-A- 4 955 638

## Beschreibung

Die Erfindung betrifft eine Transportsicherung an einem Gurtaufroller für Sicherheitsgurte, insbesondere Gurtaufroller mit integriertem Strafferantrieb, bei welchem die in einem Gehäuse drehbar gelagerte, mit einer Blockierverzahnung versehene Gurtspule durch eine Sperrklinke drehfest blockierbar ist und das Gehäuse mittels einer Schraube am Fahrzeug befestigt wird.

Gurtstraffer werden im Kollisionsfalle durch einen Beschleunigungssensor ausgelöst. Die Aktivierung eines Gurtstraffers an einem nicht belegten Sitz oder bei einem unbenutzten Sicherheitsgurt ist offensichtlich unerwünscht. Durch Abtastung des Gurtbandwickels kann festgestellt werden, ob ein Sicherheitsgurt benutzt wird. Bei vollständig auf der Gurtspule aufgewickeltem Gurtband kann die Funktion des Beschleunigungssensors gesperrt werden, so daß eine Auslösung des Gurtstraffers nicht erfolgen kann.

Durch die Erfindung wird darüber hinaus gewährleistet, daß keine unbeabsichtigte Aktivierung des Gurtstraffers während seines Transports erfolgen kann. Gemäß der Erfindung ist am Gehäuse des Gurtaufrollers eine Spange befestigt, die mit einem federelastischen Schenkel an der Sperrklinke angreift und diese in Eingriff mit der Blockierverzahnung an der Gurtspule hält, wobei der federelastische Schenkel durch die Schraube bei der Montage des Gurtaufrollers von der Sperrklinke fort ausgelenkt wird. Da die Sperrklinke bei noch nicht im Fahrzeug eingebautem Gurtaufroller dessen Spule blockiert, kann kein Gurtband abgezogen werden. Folglich ist auch die Funktion des Beschleunigungssensors gesperrt. Eine Aktivierung des Gurtstraffers ist daher nicht möglich. Erst durch die Montage des Gurtaufrollers in einem Fahrzeug mittels der Befestigungsschraube wird die Sperrklinke freigegeben.

Gemäß einer vorteilhaften Ausführungsform ist die Spange einteilig mit einer bügelförmigen Klammer ausgebildet und mittels dieser Klammer am Gehäuse befestigt. Die Klammer wird lediglich auf das Gehäuse aufgeschoben und bedarf keiner weiteren Befestigungsmittel.

Weitere Merkmale und Vorteile der Erfindung ergeben sich aus der folgenden Beschreibung einer bevorzugten Ausführungsform und aus der Zeichnung, auf die Bezug genommen wird.

In der Zeichnung zeigen:
- Fig. 1: eine Perspektivansicht eines Gurtaufrollers mit Transportsicherung; und
- Fig. 2: eine schematische Seitenansicht desselben Gurtaufrollers bei der Montage.

Der Gurtaufroller weist in üblicher Form eine in einem Gehäuse 10 drehbar gelagerte Gurtspule 12 auf, an deren seitlichen Flanschen eine Blockierverzahnung 14 angeformt ist.

In dem Gehäuse 10 sind zwei Sperrklinken 16, 18, die durch einen Steg 20 starr miteinander verbunden sind, schwenkbar gelagert. An diesem Steg 20 ist ein Betätigungshebel 22 gebildet.

Das Gehäuse 10 weist ein rundes Durchgangsloch 24 für eine Schraube 25 auf, mittels welcher das Gehäuse am Fahrzeugaufbau befestigt wird. Eine Spange 26 aus Federstahl besteht aus einer bügelförmigen Klammer, die auf das Gehäuse 10 aufgeschoben ist, und einem federelastischen Schenkel 28, der gegen den Betätigungsarm 22 drückt und die Sperrklinken 16, 18 in Eingriff mit den Blockierverzahnungen 14 hält.

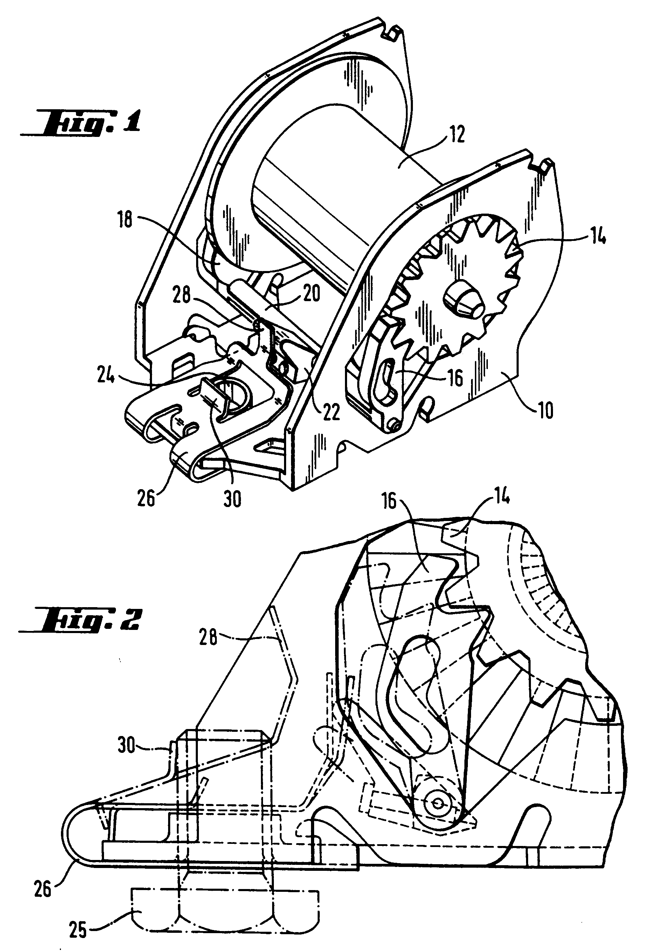

Die Spange umgibt mit zwei seitlichen Armen die Öffnung 24 und besitzt eine angeformte Lasche 30, die in den durch die Öffnung 24 gebildeten Durchgang ragt. Wie aus Fig. 2 ersichtlich ist, drückt die Schraube 25 bei der Montage des Gurtaufrollers gegen diese Lasche 30, wodurch der federelastische Schenkel 28 von dem Betätigungsarm 22 fortgedrückt wird. Die Sperrklinken 16, 18 sind nun freigegeben und werden durch eine Rückstellfeder außer Eingriff mit den Blockierverzahnungen 14 verschwenkt.

## Patentansprüche

1. Transportsicherung an einem Gurtaufroller für Sicherheitsgurte, insbesondere Gurtaufroller mit integriertem Strafferantrieb, bei welchem die in einem Gehäuse drehbar gelagerte, mit einer Blockierverzahnung versehene Gurtspule durch eine Sperrklinke drehfest blockierbar ist und das Gehäuse mittels einer Schraube am Fahrzeug befestigt wird, dadurch gekennzeichnet, daß am Gehäuse (10) eine Spange (26) befestigt ist, die mit einem federelastischen Schenkel (28) an der Sperrklinke (16, 18) angreift und diese in Eingriff mit der Blockierverzahnung (14) an der Gurtspule (12) hält, und daß der federelastische Schenkel (28) durch die Schraube (25) bei der Montage des Gurtaufrollers von der Sperrklinke fort auslenkbar ist.

2. Transportsicherung nach Anspruch 1, dadurch gekennzeichnet, daß die Spange (26) einteilig mit einer bügelförmigen Klammer ausgebildet und mittels dieser Klammer am Gehäuse (10) befestigt ist.

## Claims

1. A transport guard device on a belt retractor for safety belts, more particularly a belt retractor with an integrated belt pretensioner drive, wherein the belt drum, which is rotatably supported in a housing and is provided with ratchet teeth, is able to be locked against rotation by a pawl, and the housing is secured to the vehicle by means of a bolt, characterized in that a clip (26) is provided on the housing (10) and has a resiliently elastic limb (28) engaging the pawl (16, 18) and holding same in engagement with the ratchet teeth (14) on the belt drum (12), and that the resiliently elastic limb (28) can be deflected by the bolt (25) away from the pawl during assembly of the belt retractor.

2. The transport guard device as claimed in claim 1, characterized in that the clip (26) is formed integrally with a U-shaped clamping member and is secured to the housing (10) by means of this clamping member.

## Revendications

1. Fixation de transport sur un enrouleur de ceinture pour ceintures de sécurité, en particulier pour enrouleurs de ceinture avec entraînement tendeur intégré, où la bobine de ceinture, logée de façon rotative dans un boîtier et pourvue d'une denture de blocage, peut être bloquée en rotation au moyen d'un cliquet et où le boîtier est fixé sur le véhicule au moyen d'une vis,
caractérisée en ce qu'une agrafe (26) est fixée sur le boîtier (10), agrafe qui coopère, par une branche (28) ayant l'élasticité d'un ressort, avec le cliquet de blocage (16, 18) et maintient ce cliquet en prise avec la denture de blocage (14) sur la bobine (12) de la ceinture, et en ce que la branche (28), ayant l'élasticité d'un ressort, est entraînée hors d'engagement avec le cliquet de blocage, par la vis (25), lors du montage de l'enrouleur de ceinture.

2. Fixation de transport selon la revendication 1, caractérisé en ce que l'agrafe (26) est conformée d'un seul tenant avec une attache en U et est fixée sur le boîtier (10) par l'intermédiaire de cette attache.
